# EUROPÄISCHE PATENTANMELDUNG

(11) **EP 3 719 736 A1**
(43) Veröffentlichungstag der Anmeldung: **07.10.2020**
(21) Anmeldenummer: 19166537.1
(22) Anmeldetag: 01.04.2019
(51) Int. Cl.: G06Q 50/06

(54) **VERFAHREN UND VORRICHTUNG FÜR EIN AUTOMATISCHES SELEKTIEREN EINES OPTIMALEN HERSTELLUNGSABLAUFES**

(71) Anmelder: Siemens Aktiengesellschaft, 80333 München (DE)
(72) Erfinder: Franze, Volker, 91207 Lauf an der Pegnitz (DE); Geipel, Markus Michael, 80799 München (DE); Rottmann, Axel, 81825 München (DE); Weinert, Kai, 90518 Altdorf (DE)

(57) **Zusammenfassung**

Zusammenfassend betrifft die vorliegende Erfindung Verfahren für ein automatisches Selektieren eines optimalen Herstellungsablaufes für ein Industrieprodukt mit den Schritten: Empfangen von einer Vorrichtung einer durch einen Industrieproduktbesteller bereitgestellte Industrieproduktbeschreibung und eine Materialstückliste für das Industrieprodukt, wobei die Materialstückliste eine Anzahl der jeweiligen Einzelkomponenten des Industrieproduktes entsprechend der empfangenen Industrieproduktbeschreibung umfasst;
Prüfen ob auch eine von dem Industrieproduktbesteller bereitgestellte Herstellungsanleitung zur Herstellung des Industrieproduktes empfangen wird;
Erzeugen einer Herstellungsanleitung zur Herstellung des Industrieproduktes auf Basis der empfangenen Industrieproduktbeschreibung, falls keine Herstellungsanleitung zur Herstellung des Industrieproduktes von dem Industrieproduktbesteller wird;
Zerlegen der erzeugten oder empfangenen Herstellungsanleitung zur Herstellung des Industrieproduktes in wenigstens eine Herstellungsanweisung, die einzelne separate Herstellungsschritte und/oder Baugruppen des Industrieproduktes umfasst; Senden der Herstellungsanweisung durch die Vorrichtung an wenigsten einen Industrieprodukthersteller zur Ermittlung notwendiger Herstellungsbedingungen für das Industrieprodukt entsprechend der gesendeten Herstellungsanweisung;
Empfangen von der Vorrichtung die ermittelten Herstellungsbedingungen des Industrieproduktherstellers zur Herstellung des Industrieproduktes; und
Selektieren durch die Vorrichtung auf Basis der empfangenen Herstellungsbedingungen den optimalen Herstellungsablauf für das Industrieprodukt.

Zudem betrifft die vorliegende Erfindung eine Vorrichtung und ein Computerprogrammprodukt.

Diesbezüglich wird automatisch eine optimale Herstellungsvariante zur Herstellung des Industrieproduktes bereitgestellt.

## Beschreibung

Die Grundlage für einen Markterfolg eines Industrieproduktes ist ein optimaler Herstellungsprozess. Ein optimaler Herstellungsprozess erfüllt für den Industrieproduktbesteller eine bestimmte Anzahl an wünschenswerten Leistungskennzahlen, beispielsweise, Qualität, Stückzahl, Kosten, usw. Insbesondere spielt hierbei eine tragende Rolle, dass ein Industrieprodukt in den meisten Fällen sehr komplex und aus verschiedenen Einzelkomponenten aufgebaut ist. Diese Einzelkomponenten als auch die finale Herstellung können durch verschiedene Industrieprodukthersteller an unterschiedlichen Herstellungsstandorten bereitgestellt werden. Somit bedarf der gesamte Herstellungsprozess beginnend bei der Beauftragung, über die Herstellung bis zur Auslieferung einer intensiven vorausgehenden Planung und ständigen Analyse und Kontrolle bzw. Korrektur.

Einen für den Industrieproduktbesteller entsprechend seiner gewünschten Leistungskennzahlen optimalen Herstellungsprozess eines Industrieproduktes Herstellerübergreifend zu planen, ist mit im Stand der Technik bekannten Mitteln noch immer ein zumeist manuell ausgeführter Prozess. Insbesondere ist in der Planungsphase beispielsweise zu analysieren, wie ein Industrieprodukt sinnvoll in Teilkomponenten für die Herstellung zerlegt werden kann. Zudem muss analysiert werden, wie eine optimale Herstellung des Industrieproduktes erfolgen muss, um die entsprechend geforderten Leistungskennzahlen zu erfüllen. Ferner muss analysiert werden, welcher Hersteller mit welcher Herstellungskapazität und an welchem Herstellungsstandort die Herstellung ausführen kann. Entsprechend der vorangegangenen Analyse muss die Herstellung des Industrieproduktes bzw. dessen Einzelkomponenten auf die zuvor analysierten Herstellungsstandorte verteilt werden. Des Weiteren muss analysiert werden, ob das Industrieprodukt komplett ausgelagert, teilweise ausgelagert oder komplett in-house hergestellt werden kann.

Diese Analyseschritte sind zumeist manuell auszuführende Prozessschritte. Das sinnvolle Zerlegen des Industrieproduktes in Teilkomponenten ist ein manuell ausgestalteter Prozess und basiert auf menschlichen Erfahrungen oder darauf, dass bereits existierende Komponenten wiederverwendet werden können. Ebenso ist die optimale Verteilung der Herstellung auf mehrere Hersteller/Herstellungsstandorte ein manueller Schritt. Hierzu müssen Anfragen versendet, Angebote gesichtet und verglichen werden. Zusätzlich ergibt sich die Schwierigkeit, dass bei der Einbindung von externen Herstellern zusätzlich Verträge ausgehandelt werden müssen.

Dies vergrößert den zeitlichen und technischen Aufwand für die Planung eines optimalen Herstellungsablauf für ein Industrieprodukt.

Es ist daher Aufgabe der vorliegenden Erfindung ein Verfahren und eine Vorrichtung bereitzustellen, die automatisch einen optimalen Herstellungsablauf für die Herstellung eines Industrieproduktes bereitstellt.

Diese Aufgabe wird erfindungsgemäß durch ein Verfahren und eine Vorrichtung für ein automatisches Selektieren eines optimalen Herstellungsablaufes für ein Industrieprodukt mit den in den Patentansprüchen 1 und 9 angegebenen Merkmalen gelöst.

Die Erfindung schafft demnach ein Verfahren für ein automatisches Selektieren eines optimalen Herstellungsablaufes für ein Industrieprodukt mit den Schritten:
Empfangen von einer Vorrichtung einer durch einen Industrieproduktbesteller bereitgestellte Industrieproduktbeschreibung und eine Materialstückliste für das Industrieprodukt, wobei die Materialstückliste eine Anzahl der jeweiligen Einzelkomponenten des Industrieproduktes entsprechend der empfangenen Industrieproduktbeschreibung umfasst;
Prüfen ob auch eine von dem Industrieproduktbesteller bereitgestellte Herstellungsanleitung zur Herstellung des Industrieproduktes empfangen wird;
Erzeugen einer Herstellungsanleitung zur Herstellung des Industrieproduktes auf Basis der empfangenen Industrieproduktbeschreibung, falls keine Herstellungsanleitung zur Herstellung des Industrieproduktes von dem Industrieproduktbesteller empfangen wird;
Zerlegen der erzeugten oder empfangenen Herstellungsanleitung zur Herstellung des Industrieproduktes in wenigstens eine Herstellungsanweisung, die einzelne separate Herstellungsschritte und/oder Baugruppen des Industrieproduktes umfasst; Senden der Herstellungsanweisung durch die Vorrichtung an wenigsten einen Industrieprodukthersteller zur Ermittlung notwendiger Herstellungsbedingungen für das Industrieprodukt entsprechend der gesendeten Herstellungsanweisung;
Empfangen von der Vorrichtung die ermittelten Herstellungsbedingungen des Industrieproduktherstellers zur Herstellung des Industrieproduktes; und
Selektieren durch die Vorrichtung auf Basis der empfangenen Herstellungsbedingungen den optimalen Herstellungsablauf für das Industrieprodukt.

Im Sinne der vorliegenden ist unter einem Herstellungsablauf der vollständige Prozess zur Herstellung eines Industrieproduktes zu verstehen. Dieser beginnt mit der Beauftragung zur Herstellung eines Industrieproduktes durch einen Industrieproduktbesteller und umfasst die Kernbereiche Vorplanung, Transport, Produktion, Versand, Auslieferung des hergestellten Industrieproduktes an den Industrieproduktbesteller. Der Industrieproduktbesteller, beispielsweise ein Einkäufer beauftragt die Vorrichtung gemäß der vorliegenden Erfindung einen optimalen Herstellungsablauf für ein gewünschtes Industrieprodukt bereitzustellen.

Zudem ist im Sinne der vorliegenden Erfindung unter einem Industrieprodukthersteller derjenige zu verstehen, der die Maschinen, Know-how und Kapazitäten zur Herstellung des bestellten Industrieproduktes zur Verfügung hat und für die Herstellung zu dem Zeitpunkt zur Verfügung stellen kann.

Ferner ist im Sinne der vorliegenden Erfindung unter einer Industrieproduktbeschreibung die Spezifikation des Industrieproduktes zu verstehen, beispielsweise in digitaler Form, in der das Industrieprodukt spezifiziert ist. Beispielsweise umfasst die Industrieproduktbeschreibung die Ausmaße, die Farbe, die Funktionsbeschreibung und das Material aus dem das Industrieprodukt hergestellt ist. Diese beispielhafte Auflistung stellt keine Beschränkung der enthaltenen Parameter der Industrieproduktbeschreibung dar. Vielmehr können noch weitere Parameter in der Industrieproduktbeschreibung aufgenommen werden. Die Materialstückliste beschreibt die Anzahl der zu verwendenden Einzelkomponenten für die Herstellung des Industrieproduktes.

Ferner ist im Sinne der vorliegenden Erfindung unter einer Herstellungsanleitung die Anleitung zum Herstellen und Montieren des Industrieproduktes zu verstehen. Diese Herstellungsanleitung kann in einzelne Herstellungsanweisungen zerlegt werden. Die Herstellungsanweisung kann einzelne separate Herstellungsschritte und/oder Baugruppen, sowie deren Herstellung des Industrieproduktes umfassen. Diesbezüglich wird die Herstellung des Industrieproduktes bis zur kleinsten Teilkomponente aufgeteilt und kann somit durch verschiedene Industrieprodukthersteller hergestellt werden.

Der vorliegenden Erfindung liegt die Kenntnis zu Grunde, dass ein Bedarf zur Automatisierung der Planung im Herstellungsprozess besteht. In vorteilhafter Weise können mittels der vorliegenden Erfindung alle bisher manuell auszuführenden Schritte, die zur Herstellung, insbesondere zur verteilten Herstellung, eines Industrieproduktes über mehrere und unterschiedliche Herstellungsstandorte und Industrieprodukthersteller hinweg notwendig sind, automatisiert, insbesondere optimal automatisiert ausgeführt werden.

Weiterhin vorteilhaft ist, dass eine sinnvolle Zerlegung des Industrieproduktes, welches zuvor noch nicht produziert wurde, schnell, effizient und automatisiert in einzelne Herstellungsanweisungen erfolgen kann. Diesbezüglich muss ein Industrieproduktbesteller diese Fähigkeit für die Herstellung seines gewünschten Industrieproduktes nicht selbst aufbauen.

Ferner kann der selektierte optimale Herstellungsablauf für folgende Herstellungsprozesse gleicher oder ähnlich Industrieprodukte gleich oder sinngemäß zur Herstellung verwendet werden, wodurch Herstellungszeit und Kosten reduziert werden können.

Vorteilhafte Ausführungsformen und Weiterbildungen ergeben sich aus den Unteransprüchen, sowie aus der Beschreibung unter Bezugnahme auf die Figuren.

In einer vorteilhaften Ausführungsform umfasst der optimale Herstellungsablauf für das Industrieprodukt eine optimale Aufteilung des Industrieproduktes in die Herstellungsanweisung und auf die Industrieprodukthersteller, sowie ein Abbilden der Herstellungsanweisung auf die empfangenen Herstellungsbedingungen der Industrieprodukthersteller.

In vorteilhafter Weise werden die für die optimale Herstellung des Industrieproduktes notwendigen Herstellungsanweisungen auf die zur Verfügung stehenden Industrieprodukthersteller mit den entsprechenden Herstellungsbedingungen abgebildet. Insbesondere kann hierbei die optimale Herstellungsbedingung eines Industrieprodukthersteller einer Herstellungsanweisung zugeordnet werden, wodurch der Herstellungsprozess für diese Herstellungsanweisung optimiert und somit Zeit- und Kosteneffizient ausgeführt werden kann.

In einer weiteren vorteilhaften Ausführungsform erfolgt das Selektieren des optimalen Herstellungsablaufes für ein Industrieprodukt durch ein mit den empfangenen Herstellungsbedingungen trainiertes künstliches neurales Netzwerk.

In vorteilhafter Weise können auf Basis der Herstellungsanweisung und der von dem oder der Industrieprodukthersteller bereitgestellten Herstellungsbedingungen ein künstliches neuronales Netzwerk trainiert werden. Auf Basis des trainierten neuronalen Netzwerkes können für folgende und vergleichbare weitere Anfragen zur Herstellung eines Industrieproduktes der optimale Herstellungsablauf schneller und effizienter bereitgestellt werden. Beispielsweise können somit Industrieprodukthersteller für spezifische Industrieprodukte oder Teilkomponenten mit entsprechenden Herstellungsbedingungen identifiziert werden, die für einen optimalen Herstellungsablauf geeignet sind. Eine aufwendige Analyse verfügbarer Industrieprodukthersteller und deren Herstellungsbedingungen für das Industrieprodukt ist mit geringerem Zeit- und Kostenaufwand möglich.

Durch das künstliche neurale Netzwerk können automatisch optimale Herstellungsabläufe selektiert werden, auf Basis der vormals empfangenen Herstellerbedingungen und der entsprechend zu den empfangenen Herstellerbedingungen getroffenen Auswahl der Herstellerabläufe.

In einer Ausführungsform umfasst das künstliche neuronale Netzwerk ein "Deep Neural Network (DNN)", insbesondere ein "Convolutional Neural Network (CNN)" und/oder ein "Recurrent Neural Network (RNN)" und/oder ein "Deep Feed Forward Network".

Ein DNN ist ein künstliches neuronales Netzwerk mit mehreren Schichten zwischen den Eingangs- und Ausgangsschichten. Das DNN sucht hierbei die richtige mathematische Manipulation der Daten, um den Eingang in den Ausgang umzuwandeln. Hierbei erfolgt eine lineare oder eine nichtlineare Beziehung. Das Netzwerk bewegt sich durch die Schichten und berechnet die Wahrscheinlichkeit für jede Ausgabe. Das Ziel ist es, dass das Netzwerk schließlich trainiert wird, um Daten in Merkmale zu zerlegen, Trends in den Daten zu identifizieren, die über alle Stichproben hinweg existieren und neue Daten anhand ihrer Ähnlichkeiten zu klassifizieren, ohne dass menschliches Zutun erforderlich ist.

DNNs können komplexe nichtlineare Beziehungen modellieren. DNN-Architekturen erzeugen hierbei Kompositionsmodelle, bei denen das Objekt als geschichtete Zusammensetzung von Primitiven ausgedrückt werden kann. Die zusätzlichen Schichten des DNN ermöglichen die Zusammensetzung von Merkmalen aus niedrigeren Schichten, wodurch potenziell komplexe Daten mit weniger Einheiten als in einem ähnlich leistungsfähigen flachen Netzwerk modelliert werden können.

Grundsätzlich besteht die Struktur eines klassischen "Convolutional Neural Networks" aus einem oder mehreren "Convolutional Layer", gefolgt von einem "Pooling Layer". Diese Layer kann sich prinzipiell beliebig oft wiederholen, bei ausreichend Wiederholungen spricht man dann von "Deep Convolutional Neural Networks", die in den Bereich Deep Learning fallen.

In einer weiteren vorteilhaften Ausführungsform umfassen die Herstellungsbedingungen eine Produzierbarkeit.

In vorteilhafter Weise kann automatisch abgefragt werden, ob ein Industrieprodukthersteller das Industrieprodukt oder einzelne Teilkomponenten des Industrieproduktes herstellen kann.

In einer weiteren vorteilhaften Ausführungsform umfassen die Herstellungsbedingungen einen Betrag der Produktionskosten.

In vorteilhafter Weise kann automatisch abgefragt werden, welche Kosten für die Herstellung des Industrieproduktes oder für eine einzelne Teilkomponente des Industrieproduktes bei den jeweiligen Industrieproduktherstellern und den einzelnen Herstellungsstandorten anfallen.

In einer weiteren vorteilhaften Ausführungsform umfassen die Herstellungsbedingungen einen Zeitpunkt des Produktionsbeginns.

In vorteilhafter Weise kann automatisch abgefragt werden, wann die Herstellung für ein Industrieprodukt gestartet werden kann. Dies ermöglicht ein effizientes Verteilen und optimieren des Herstellungsprozesses bei einem Industrieprodukt mit mehreren separaten Einzelkomponenten, die verteilt hergestellt werden.

In einer weiteren vorteilhaften Ausführungsform umfassen die Herstellungsbedingungen eine Produktionsdauer.

In vorteilhafter Weise kann automatisch abgefragt werden, wann die Herstellung für ein Industrieprodukt abgeschlossen werden kann bzw. welchen zeitlichen Umfang die Herstellung des Industrieproduktes hat. Dies ermöglicht ein effizientes Verteilen und Optimieren des Herstellungsprozesses bei einem Industrieprodukt mit mehreren separaten Einzelkomponenten die verteilt hergestellt werden.

In einer weiteren vorteilhaften Ausführungsform umfassen die Herstellungsbedingungen einen Zeitpunkt der Produktlieferung.

In vorteilhafter Weise kann automatisch abgefragt werden, wann die Herstellung des Industrieproduktes oder einer Teilkomponente des Industrieproduktes abgeschlossen ist. Dies ermöglicht eine Optimierung des Herstellungsprozesses, als auch eine Optimierung der Auslieferung.

In einer weiteren vorteilhaften Ausführungsform umfassen die Herstellungsbedingungen erfüllbare Leistungskennzahlen.

Eine Leistungskennzahl bezeichnet eine Kennzahl anhand derer der Fortschritt oder der Erfüllungsgrad hinsichtlich wichtiger Zielsetzungen oder kritische Erfolgsfaktoren gemessen und/oder ermittelt werden können. In vorteilhafter Weise kann automatisch abgefragt werden, welche Leistungskennzahlen die jeweiligen Industriehersteller erfüllen können. Diese können mit den von dem Industrieproduktbesteller geforderten Leistungskennzahlen verglichen werden. Dies ermöglicht eine optimierte, effizientere und schnellere Auswahl an entsprechend geeigneten Industrieproduktherstellern zur Herstellung des Industrieproduktes.

In einer weiteren vorteilhaften Ausführungsform umfassen die Herstellungsbedingungen erfüllbare Qualitätskennzahlen.

In vorteilhafter Weise kann automatisch eine Qualitätssicherung des herzustellenden Industrieproduktes durch vorherige automatische Abfrage von Qualitätskennzahlen erfolgen. Weiterhin vorteilhaft können laufende Herstellungsprozesse durch weitere Abfragen auf ihre geforderte Qualität hin überprüft werden.

In einer weiteren vorteilhaften Ausführungsform umfasst das Ermitteln der Herstellungsbedingungen eine Simulation zur Herstellung des Industrieproduktes, insbesondere ein 2D/3D CAD-Modell, durch den Industrieprodukthersteller.

In vorteilhafter Weise kann der Industrieprodukthersteller eine Simulation des herzustellenden Industrieproduktes und/oder des Herstellungsprozesses vorweg dem Industrieprodukthersteller bereitstellen. Dies ermöglicht eine effizientere und schnellere Auswahl des optimalen Herstellungsablaufes.

Vorzugsweise kann der Industrieprodukthersteller ein 2D/3D CAD-Modell des herzustellenden Industrieproduktes dem Industrieprodukthersteller zur Verfügung stellen. Dies ermöglicht eine optimalere und schneller Auswahl des optimalen Herstellungsablauf, da der Industrieproduktbesteller das Ergebnis der Herstellung bereits evaluieren und mögliche Änderungen vor der eigentlichen Herstellung vornehmen kann. Notwendige Änderungen nach Produktionsstart, wodurch zeitliche und/oder monetäre Mehrkosten entstehen, werden vermieden.

In einer weiteren vorteilhaften Ausführungsform umfasst das Ermitteln der Herstellungsbedingungen ein Herstellen eines Prototyps des Industrieproduktes durch den Industrieprodukthersteller.

In vorteilhafter Weise kann der Industrieproduktbesteller das bestellte Industrieprodukt durch einen Prototyp vor der eigentlichen Freigabe des Herstellungsablaufes überprüfen. Somit kann das Selektieren des optimalen Herstellungsablaufes weiter optimiert werden.

In einer weiteren vorteilhaften Ausführungsform wird der optimale Herstellungsablauf als ein digitales Dokument dem Industrieproduktbesteller bereitgestellt.

In vorteilhafter Weise wird dem Industrieproduktbesteller wenigstens ein, vorzugsweise entsprechend der durch den Industrieproduktbesteller geforderten Leistungskennzahlen eine Vielzahl an optimaler Herstellungsabläufe in einem digitalen Dokument zur Verfügung gestellt. Auf Basis der zur Verfügung gestellten optimalen Herstellungsabläufe kann der Industrieproduktbesteller den optimalen Herstellungsablauf für das Industrieprodukt freigeben und eine Herstellung des Industrieproduktes initialisieren.

Das digitale Dokument kann ein portables Dokumentenformat (PDF), ein JavaScript Objekt Notation (JSON) Format, ein Wort-Format, ein SubRip-Textformat, ein Textformat und/oder ein EBU-STL-Format umfassen. Der optimale Herstellungsablauf kann somit in editierbaren und nicht editierbaren digitalen Dokumenten dem Industrieproduktbesteller zur Auswahl und Freigabe des optimalen Herstellungsablaufes bereitgestellt werden.

In einer weiteren vorteilhaften Ausführungsform wird der optimale Herstellungsablauf über ein Webinterface dem Industrieproduktbesteller bereitgestellt.

In vorteilhafter Weise kann der Industrieprodukthersteller somit unabhängig von Herstellungsstandort, auf einem portablen Gerät (z.B. Tablet, Laptop, Smartphone) oder einem Computer, beispielsweise über eine Web-Browser, den oder die selektierten optimalen Herstellungsabläufe analysieren und für die Herstellung des Industrieproduktes freigeben bzw. beauftragen. Zudem kann dem Industrieprodukthersteller über das Webinterface entsprechende Simulationen des Industrieproduktes zur Verifikation bereitgestellt werden.

Die Erfindung schafft ferner eine Vorrichtung für ein automatisches Selektieren eines optimalen Herstellungsablaufes für ein Industrieprodukt mit den in Anspruch 9 angegebenen Merkmalen.

Die Erfindung schafft demnach eine Vorrichtung für ein automatisches Selektieren eines optimalen Herstellungsablaufes für ein Industrieprodukt umfassend:
eine Empfangseinheit, die ausgebildet ist, eine durch einen Industrieproduktbesteller bereitgestellte Industrieproduktbeschreibung und eine Materialstückliste für das Industrieprodukt zu empfangen, wobei die Materialstückliste eine Anzahl der jeweiligen Einzelkomponenten des Industrieproduktes entsprechend der empfangenen Industrieproduktbeschreibung umfasst und die ausgebildet ist, wenigstens eine Herstellungsbedingung eines Industrieproduktherstellers zur Herstellung des Industrieproduktes zu empfangen;
eine Prüfeinheit, die zum Prüfen ausgebildet ist, ob auch eine Herstellungsanleitung zur Herstellung des Industrieproduktes empfangen wird;
eine Erzeugungseinheit, die ausgebildet ist, eine Herstellungsanleitung zur Herstellung des Industrieproduktes auf Basis der empfangenen Industrieproduktbeschreibung zu erzeugen, falls keine Herstellungsanleitung zur Herstellung des Industrieproduktes von dem Industrieproduktbesteller empfangen wird;
eine Zerlegeeinheit, die ausgebildet ist, die erzeugte oder empfangene Herstellungsanleitung zur Herstellung des Industrieproduktes in wenigstens eine Herstellungsanweisung, die einzelne separate Herstellungsschritte und/oder Baugruppen des Industrieproduktes umfasst, zu zerlegen;
eine Sendeeinheit, die ausgebildet ist, die Herstellungsanweisung an wenigsten einen Industrieprodukthersteller zur Ermittlung notwendiger Herstellungsbedingungen entsprechend der gesendeten Herstellungsanweisung zur Herstellung des Industrieproduktes zu senden; und
eine Selektionseinheit, die ausgebildet ist, auf Basis der von der Empfangseinheit empfangenen Herstellungsbedingungen den optimalen Herstellungsablauf für das Industrieprodukt zu selektieren.

In einer vorteilhaften Ausführungsform der Vorrichtung umfasst der optimale Herstellungsablauf für das Industrieprodukt eine optimale Aufteilung des Industrieproduktes in die Herstellungsanweisung und auf die Industrieprodukthersteller, sowie ein Abbilden der Herstellungsanweisung auf die empfangenen Herstellungsbedingungen der Industrieprodukthersteller.

In einer weiteren vorteilhaften Ausführungsform der Vorrichtung erfolgt das Selektieren des optimalen Herstellungsablaufes für ein Industrieprodukt durch ein mit den empfangenen Herstellungsbedingungen trainiertes künstliches neurales Netzwerk.

In einer weiteren vorteilhaften Ausführungsform der Vorrichtung kommuniziert die Vorrichtung über eine geschützte Kommunikationsverbindung, die eine kabelgebundene oder kabellose Kommunikation umfasst, mit dem Industrieproduktbesteller und/oder dem Industrieprodukthersteller.

In vorteilhafter Weise kann die Vorrichtung über eine kabelgebundene Kommunikationsverbindung (USB, Ethernet, ISDN) oder kabellose Kommunikationsverbindung (Bluetooth, WLAN) über ein Netzwerk, beispielsweise dem Internet, mit den Industrieprodukthersteller und dem Industrieproduktbesteller kommunizieren. Die Kommunikationsverbindung kann über eine geschützte bzw. verschlüsselte Kommunikationsverbindung, beispielsweise HTTPS, mit Verschlüsselung der Daten durch SSL/TSL erfolgen. Ferner können Zertifikate zum Signieren von Daten für einen verbesserten Schutz der Kommunikation und des Datenaustausches verwendet werden.

In einer weiteren vorteilhaften Ausführungsform der Vorrichtung umfasst die Vorrichtung ein Anzeigeelement, insbesondere ein Touch-Display zum Anzeigen des optimalen Herstellungsablaufes.

In vorteilhafter Weise kann die Vorrichtung ein Anzeigeelement zur Darstellung des Herstellungsablaufes umfassen. Des Anzeigeelement kann separat von der Vorrichtung zum Anzeigen des optimalen Herstellungsablaufes positioniert sein. In einer Ausführungsform kann ein Anzeigeelement eines anderen Gerätes, das mit der Vorrichtung kommuniziert, verwendet werden. Zudem kann über das Anzeigeelement der Selektionsprozess dargestellt werden. Diesbezüglich kann der Industrieproduktbesteller während des Selektionsprozesses einen optimalen Herstellungsablauf auswählen oder den Selektionsprozess vorzeitig beenden.

In einer weiteren vorteilhaften Ausführungsform der Vorrichtung wird der optimale Herstellungsablauf als ein digitales Dokument an den Industrieproduktbesteller bereitgestellt.

In einer weiteren vorteilhaften Ausführungsform der Vorrichtung wird der optimale Herstellungsablauf über ein Webinterface an den Industrieproduktbesteller bereitgestellt.

In einer weiteren vorteilhaften Ausführungsform der Vorrichtung, ist die Vorrichtung als ein Computer, ein portables Gerät, als ein Server und/oder Serververbund, insbesondere als ein Cloudsystem ausgebildet.

Die Erfindung schafft ferner ein Computerprogramm mit Programmcode für das Ausführen eines Verfahrens nach einem der vorherigen Verfahrensansprüche, wenn das Computerprogramm auf einem elektronischen Gerät ausgeführt wird. Das Computerprogramm kann als Signal per Download bereitgestellt oder in einer Speichereinheit einer tragbaren Vorrichtung mit darin enthaltenem computerlesbarem Programmcode gespeichert werden, um eine Vorrichtung zur Ausführung von Anweisungen gemäß dem oben genannten Verfahren zu veranlassen. Die Realisierung der Erfindung durch ein Computerprogrammprodukt hat den Vorteil, dass bereits vorhandene elektronische Geräte, beispielsweise Computer, portable Geräte, Smartphones leicht durch Software-Updates verwendet werden können, um wie von der Erfindung vorgeschlagen, eine automatische Selektion eines optimalen Herstellungsablaufes für ein Industrieprodukt durchzuführen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserung oder Ergänzungen zu der jeweiligen Grundform der vorliegenden Erfindung hinzufügen.

Die vorliegende Erfindung wird nachfolgend anhand der in den schematischen Figuren der Zeichnungen angegebenen Ausführungsbeispiele näher erläutert. Es zeigen dabei:
- Fig. 1: ein Blockdiagramm zur Darstellung eines möglichen Ausführungsbeispiels für ein automatisches Selektieren eines optimalen Herstellungsablaufes für ein Industrieprodukt;
- Fig. 2: ein Ablaufdiagramm zur Darstellung eines möglichen Ausführungsbeispiels eines erfindungsgemäßen Verfahrens;
- Fig. 3: ein Blockschaltbild zur Darstellung eines Ausführungsbeispiels einer erfindungsgemäßen Vorrichtung;
- Fig. 4: ein Blockdiagramm zur Darstellung eines zeitlichen Ablaufs eines erfindungsgemäßen Verfahrens.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche, und gleich wirkende Elemente, Merkmale und Komponenten - sofern nichts anderes ausgeführt ist - jeweils mit denselben Bezugszeichen zu versehen.

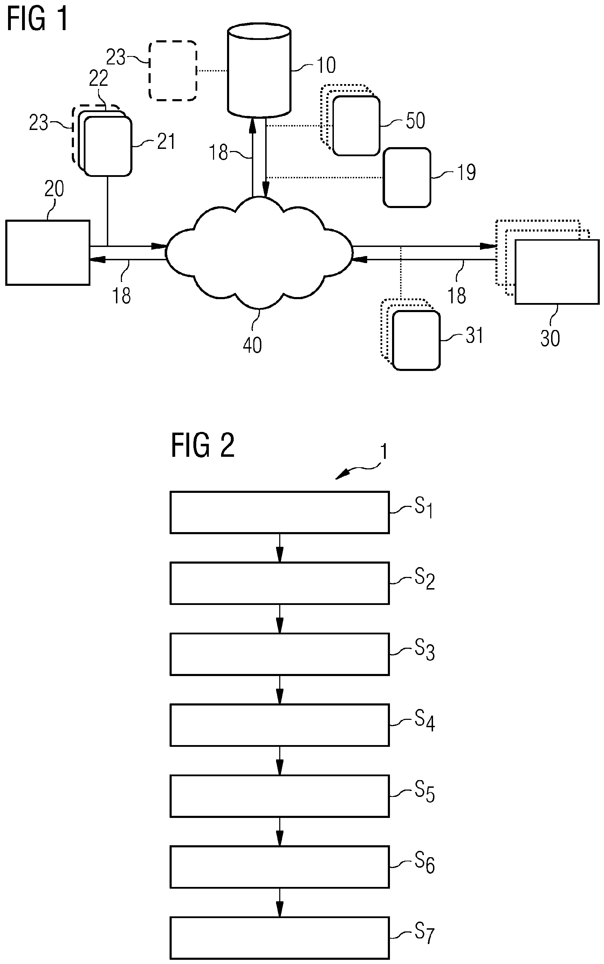

Fig. 1 zeigt ein Blockdiagramm zur Darstellung eines möglichen Ausführungsbeispiels für ein automatisches Selektieren eines optimalen Herstellungsablaufes für ein Industrieprodukt.

In Fig. 1 bezeichnet Bezugszeichen 10 die Vorrichtung für ein automatisches Selektieren eines optimalen Herstellungsablaufes 50. Die Vorrichtung 10 kommuniziert über eine geschützte Kommunikationsverbindung 18 über ein Netzwerk 40, beispielsweise dem Internet mit dem Industrieproduktbesteller 20 und dem Industrieprodukthersteller 30. Der Industrieproduktbesteller 20 stellt über eine geschützte Verbindung 18 eine Industrieproduktbeschreibung 21 und ein Materialstückliste 22 zur Herstellung eines Industrieproduktes an die Vorrichtung 10 zur Verfügung. Die Industrieproduktbeschreibung 21 kann beispielsweise als ein Text ausgebildet sein und Merkmale und/oder Eigenschaften des Industrieproduktes erklären. Insbesondere kann die Industrieproduktbeschreibung als ein digitaler Zwilling ("digital twin") des Industrieproduktes ausgebildet sein.

Die Vorrichtung 10 erzeugt auf Basis der von dem Industrieproduktbesteller bereitgestellten Industrieproduktbeschreibung 21 eine Herstellungsanleitung 23, falls diese nicht zusätzlich von dem Industrieproduktbesteller 20 bereitgestellt wird. Die Herstellungsanleitung 23 für das Industrieprodukt spezifiziert die einzelnen Baugruppen des Industrieproduktes und die einzelnen Herstellungsschritte, die zur Herstellung des Industrieproduktes notwendig sind. Die Vorrichtung 10 zerlegt die erzeugte oder empfangene Herstellungsanleitung 23 in wenigstens eine Herstellungsanweisung 19, die über eine geschützte Kommunikationsverbindung 18 an wenigstens einen, vorzugsweise mehrere Industrieprodukthersteller 30, mit unterschiedlichen Herstellungsstandorten bereitgestellt wird. Dies hat den Vorteil, dass ein komplexes Industrieprodukt auf einzelne und wenig komplexe und aufwendige Teilschritte abgebildet wird und somit der Herstellungsablauf durch ein verteiltes Herstellen optimiert werden kann.

Auf Basis der empfangenen Herstellungsanweisung, werden durch die Industrieprodukthersteller Herstellungsbedingungen 31 zur Herstellung des Industrieproduktes über die geschützte Kommunikationsverbindung der Vorrichtung 10 bereitgestellt. Die Herstellungsbedingungen 30 umfassen beispielsweise eine Produzierbarkeit des Industrieproduktes. Hierdurch wird durch den Industrieprodukthersteller glaubwürdig bestätigt, ob eine Herstellung des Industrieproduktes oder einer Teilkomponente des Industrieproduktes durchgeführt werden kann. Zudem umfassen die Herstellungsbedingungen 30 beispielsweise den Betrag der Produktionskosten, den Zeitpunkt des Produktionsbeginns, die Produktionsdauer, den Zeitpunkt der Produktlieferung, erfüllbare Leistungskennzahlen und/oder erfüllbare Qualitätskennzahlen.

Die Vorrichtung 10 empfängt die Herstellungsbedingungen 31 und selektiert auf Basis der empfangenen Herstellungsbedingungen 31 einen optimalen Herstellungsablauf 50 zur Herstellung des Industrieproduktes. Vorzugsweise umfasst der bereitgestellte optimale Herstellungsablauf 50 eine Vielzahl an optimalen Herstellungsabläufen, die entsprechend nach von dem Industrieproduktbesteller 20 bereitgestellten Leistungskennzahlen selektiert wurden. Der Industrieproduktbesteller 20 kann aus der Vielzahl an optimalen Herstellungsabläufen 50 den auswählen, der am meisten den Anspruch an Zeit, Kosten und/oder Effizienz entspricht.

In einer Ausführungsform wird der optimale Herstellungsablauf 50 über die geschützte Kommunikationsverbindung 18 als ein digitales Dokument bereitgestellt.

In einer weiteren Ausführungsform wird der optimale Herstellungsablauf über ein Webinterface dem Industrieproduktbesteller zur Verfügung gestellt.

In einer weiteren Ausführungsform kann die Vorrichtung 10 einen Datenaustausch, beispielsweise ein digitales Dokument, zwischen der Vorrichtung 10 und dem Industrieproduktbesteller 30 und der Vorrichtung 10 und dem Industrieprodukthersteller 30 bereitstellen. Vorzugsweise kann das digitale Dokument eine Geheimhaltungsvereinbarung und/oder Vertragsbedingungen zur Herstellung des Industrieproduktes beinhalten, die durch eine digitale Signatur oder digitale Unterschrift bestätigt werden.

Fig. 2 zeigt ein Ablaufdiagramm zur Darstellung eines möglichen Ausführungsbeispiels eines erfindungsgemäßen Verfahrens 1.

Das Verfahren 1 umfasst bei dem dargestelltem Ausführungsbeispiel mehrere Schritte. In einem ersten Schritt S1 wird von einer Vorrichtung 10 einer durch einen Industrieproduktbesteller 20 bereitgestellte Industrieproduktbeschreibung 21 und eine Materialstückliste 22 für das Industrieprodukt empfangen. Die Materialstückliste 21 umfasst eine Anzahl der jeweiligen Einzelkomponenten des Industrieproduktes entsprechend der empfangenen Industrieproduktbeschreibung 21.

In einem zweiten Schritt S2 wird geprüft, ob auch eine von dem Industrieproduktbesteller 20 bereitgestellte Herstellungsanleitung 23 zur Herstellung des Industrieproduktes empfangen wird.

In einem dritten Schritt S3 wird eine Herstellungsanleitung 23 zur Herstellung des Industrieproduktes auf Basis der empfangenen Industrieproduktbeschreibung 21 erzeugt, falls keine Herstellungsanleitung 23 zur Herstellung des Industrieproduktes von dem Industrieproduktbesteller 20 empfangen wird.

In einem weiteren Schritt S4 wird die erzeugte oder empfangene Herstellungsanleitung 23 zur Herstellung des Industrieproduktes in wenigstens eine Herstellungsanweisung 19 zerlegt. Die einzelne Herstellungsanweisung 19 umfasst einzelne separate Herstellungsschritte und/oder Baugruppen des Industrieproduktes. Diesbezüglich kann die Herstellung des Industrieproduktes aufgeteilt werden, beispielsweise in die Herstellung einer Leiterplatine, Herstellung des Gehäuses, Bestückung der Leiterplatine, Zusammenbau der Leiterplatine und des Gehäuses. Im Schritt S4 kann eine Vielzahl an Herstellungsanweisungen erzeugt werden, die alle eine Möglichkeit zur Herstellung des Industrieproduktes darstellen.

In einem weiteren Schritt S5 wird die Herstellungsanweisung 19 an wenigsten einen Industrieprodukthersteller 30 zur Ermittlung notwendiger Herstellungsbedingungen 31 für das Industrieprodukt entsprechend der gesendeten Herstellungsanweisung 19 gesendet. Das Versenden der Herstellungsanweisung 19 ist eine Anfrage an die Industrieprodukthersteller, ob beispielsweise dessen Herstellungsstandort das Industrieprodukt oder eine Teilkomponente des Industrieproduktes in entsprechender Zeit, mit entsprechenden Materialien, mit entsprechender Qualität und Kosten herstellen kann.

In einem weiteren Schritt S6 werden von der Vorrichtung 10 die ermittelten Herstellungsbedingungen 31 des Industrieproduktherstellers 30 zur Herstellung des Industrieproduktes empfangen. Jeder Industrieprodukthersteller 30 und jeder Herstellungsstandort des Industrieprodukthersteller 30 ermittelt, ob die gewünschte Herstellungsanweisung 19, insbesondere die Baugruppe und der Arbeitsschritt hergestellt und ausgeführt werden können. Zudem ermittelt jeder Industrieprodukthersteller 30 unter welchen Bedingungen die Baugruppe hergestellt und der Arbeitsschritt ausgeführt werden kann. Diese ermittelten Informationen werden als Herstellungsbedingungen 31 der Vorrichtung 10 bereitgestellt.

In einem siebten Schritt S7 wird auf Basis der empfangenen Herstellungsbedingungen 31 ein optimaler Herstellungsablauf 50 für das Industrieprodukt selektiert. Vorzugsweise kann aus allen bereitgestellten Herstellungsbedingungen 31, insbesondere allen Angeboten der Industrieprodukthersteller und Herstellungsstandorten zur Herstellung des Industrieproduktes ein optimaler Herstellungsablauf selektiert werden, der eine optimale Aufteilung des Industrieproduktes in Baugruppen und Herstellungsschritte und eine mögliche Abfolge von Herstellungsstandorten und Industrieproduktherstellern umfasst. Dieser kann dem Industrieproduktbesteller 20 zur Freigabe der Herstellung des Industrieproduktes nach dem optimalen Herstellungsablauf bereitgestellt werden.

In einer Ausführungsform können die bereitgestellten Herstellungsbedingungen 23 zum automatischen Trainieren eines künstlichen neuralen Netzwerks verwendet werden. Insbesondere kann das künstliche neurale Netzwerk auf Basis der Herstellungsbedingungen 23 und den entsprechend manuell selektiertem oder selektierten Herstellungsablauf 50 trainiert werden.

In einer Ausführungsform kann das trainierte künstliche neurale Netzwerk verwendet, einen optimalen Herstellungsablauf zu selektieren.

In einer alternativen Ausführungsform werden mehrere optimale Herstellungsabläufe gemäß durch den Industrieprodukthersteller 20 vorgegebenen Leistungskennzahlen bereitgestellt und aufgelistet. Der Industrieproduktbesteller 20 wählt den für sich optimalen Herstellungsablauf aus und kann die Herstellung des Industrieproduktes gegenüber der Vorrichtung 10 freigeben bzw. beauftragen. Die Vorrichtung kann auf Basis des freigegebenen Herstellungsablaufes eine Herstellung des Industrieproduktes mit den jeweiligen Industrieproduktherstellern und den Herstellungsstandorten vereinbaren und initialisieren.

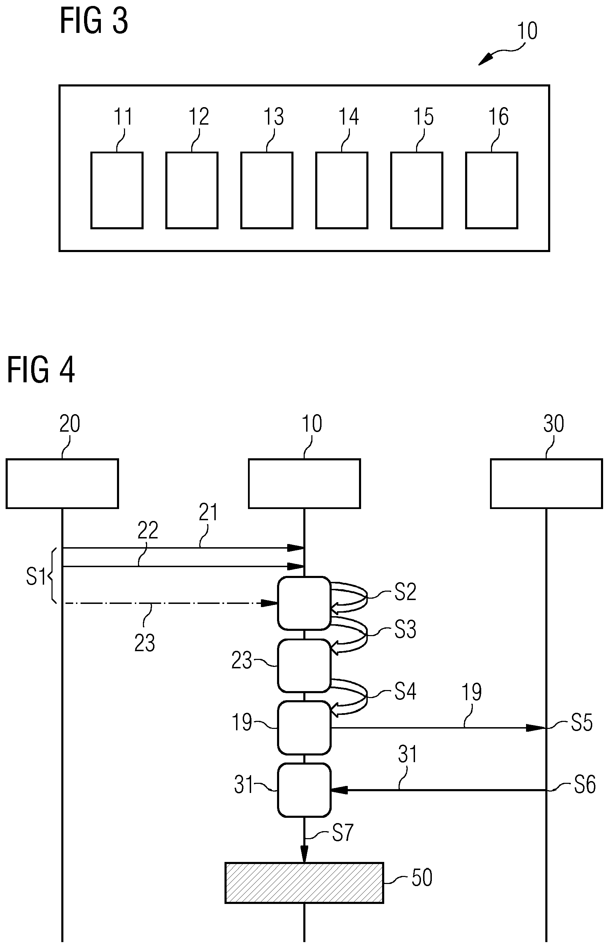

Fig. 3 zeigt ein Blockschaltbild zur Darstellung eines Ausführungsbeispiels einer erfindungsgemäßen Vorrichtung. Die Vorrichtung wird beispielhaft für die automatische Selektion eines optimalen Herstellungsablaufes für einen Stuhl dargestellt, ist aber nicht auf diese beschränkt.

In Fig. 3 bezeichnet Bezugszeichen 10 eine Vorrichtung für ein automatisches Selektieren eines optimalen Herstellungsablaufes 50 für die Herstellung eines Stuhls. Die Vorrichtung 10 umfasst eine Empfangseinheit 11, die ausgebildet ist, eine durch einen Industrieproduktbesteller 20 bereitgestellte Industrieproduktbeschreibung 21, beispielsweise den Konstruktions- und Designplans des Stuhls zu empfangen. Ferner ist die Vorrichtung 10 ausgebildet eine Materialstückliste 22 für den Stuhl zu empfangen. Die Materialstückliste 22 umfasst eine Anzahl der jeweiligen Einzelkomponenten des Industrieproduktes entsprechend der empfangenen Industrieproduktbeschreibung 21, beispielsweise die notwendigen Stuhlelemente, Schrauben, Leim und zu verwendendes Material. Ferner ist die Vorrichtung 10 ausgebildet wenigstens eine Herstellungsbedingung 31 eines Industrieproduktherstellers 30 zur Herstellung des Industrieproduktes zu empfangen.

Weiterhin umfasst die Vorrichtung eine Prüfeinheit 12, die zum Prüfen ausgebildet ist, ob auch eine Herstellungsanleitung 23 zur Herstellung des Stuhls empfangen wird.

Zudem umfasst die Vorrichtung eine Erzeugungseinheit 13, die ausgebildet ist, eine Herstellungsanleitung 23 zur Herstellung des Stuhls auf Basis der empfangenen Industrieproduktbeschreibung 21 zu erzeugen, falls keine Herstellungsanleitung 23 zur Herstellung des Stuhls von dem Industrieproduktbesteller 20 empfangen wird. Die Herstellungsanleitung 23 umfasst die Beschreibung, wie der Stuhl aufgebaut ist und wie dieser herzustellen ist.

Ferner umfasst die Vorrichtung 10 eine Zerlegeeinheit 14, die ausgebildet ist, die erzeugte oder empfangene Herstellungsanleitung 23 zur Herstellung des Stuhls in wenigstens eine Herstellungsanweisung 19 zu zerlegen. Die Herstellungsanweisung 19 umfasst einzelne separate Herstellungsschritte und/oder Baugruppen des Stuhls. Somit wird ein detaillierter Überblick über die einzelnen Baugruppen und Elemente des Stuhls bereitgestellt. Zudem sind die jeweiligen Herstellungsschritte erkenntlich, was ein verteiltes Herstellen durch verschiedene Stuhlhersteller, an unterschiedlichen Herstellungsstandorten ermöglicht.

Zudem umfasst die Vorrichtung 10 eine Sendeeinheit 15, die ausgebildet ist, die Herstellungsanweisung 19 an wenigsten einen Industrieprodukthersteller 30 zur Ermittlung notwendiger Herstellungsbedingungen 31 entsprechend der gesendeten Herstellungsanweisung 19 zur Herstellung des Stuhls zu senden. In vorteilhafter Weise kann ein Industrieprodukthersteller 30 auf Basis der zerlegten und somit detaillierten Herstellungsanweisungen die Herstellungsbedingungen für die Herstellung des Stuhls oder einer Stuhlkomponente ermitteln. Insbesondere ob der Industrieprodukthersteller 30 die entsprechende Kapazität zur Herstellung aufweist, die entsprechenden Verfahren und das notwendige Know-how um entsprechend der Herstellungsanweisung den Stuhl zu produzieren und Anforderungen an Qualität, Kosten, Material, Zeit und Menge zu erfüllen.

In einer Ausführungsform umfasst die Vorrichtung 10 eine Speichereinheit zum Speichern und/oder Zwischenspeichern der Herstellungsbedingungen und/oder eines selektierten optimalen Herstellungsablaufes. Die Speichereinheit umfasst beispielsweise eine Festplatte (HDD), einen Direktzugriffsspeicher (RAM), einen Flash-Speicher und/oder eine externe Speichervorrichtung, die mit der Vorrichtung 10 in Verbindung steht.

Ferner umfasst die Vorrichtung 10 eine Selektionseinheit 16, die ausgebildet ist, auf Basis der von der Empfangseinheit 11 empfangenen Herstellungsbedingungen 31 den optimalen Herstellungsablauf 50 für das Industrieprodukt zu selektieren.

Der selektierte optimale Herstellungsablauf 50 kann auf einem Anzeigeelement 17 (nicht dargestellt), insbesondere einem Touch-Display dem Industrieproduktbesteller 20 bereitgestellt werden.

In einer Ausführungsform kann der selektierte optimale Herstellungsablauf 50 durch ein digitales Dokument dem Industrieproduktbesteller 20 bereitgestellt werden.

In einer Ausführungsform kann der selektierte optimale Herstellungsablauf 50 durch ein Webinterface dem Industrieproduktbesteller 20 bereitgestellt werden.

Fig. 4 zeigt ein Blockdiagramm zur Darstellung eines zeitlichen Ablaufs eines erfindungsgemäßen Verfahrens.

Eine Vorrichtung 10 empfängt in einem ersten Schritt S1 einer durch einen Industrieproduktbesteller 20 bereitgestellte Industrieproduktbeschreibung 21, sowie eine Materialstückliste 22 für das Industrieprodukt. Die Materialstückliste 22 umfasst eine Anzahl der jeweiligen Einzelkomponenten des Industrieproduktes entsprechend der empfangenen Industrieproduktbeschreibung 21. In einem weiteren Schritt S2 wird geprüft, ob auch eine von dem Industrieproduktbesteller 20 bereitgestellte Herstellungsanleitung 23 zur Herstellung des Industrieproduktes empfangen wird. In einem weiteren Schritt S3 wird eine Herstellungsanleitung 23 zur Herstellung des Industrieproduktes auf Basis der empfangenen Industrieproduktbeschreibung 21 erzeugt, falls keine Herstellungsanleitung 23 zur Herstellung des Industrieproduktes von dem Industrieproduktbesteller 20 empfangen wird. In einem weiteren Schritt s4 wird die erzeugte oder empfangene Herstellungsanleitung 23 zur Herstellung des Industrieproduktes in wenigstens eine Herstellungsanweisung 19 zerlegt. Die Herstellungsanweisung 19 kann einzelne separate Herstellungsschritte und/oder Baugruppen des Industrieproduktes umfassen. In einem weiteren Schritt S5 wird die Herstellungsanweisung 19 durch die Vorrichtung 10 an wenigsten einen Industrieprodukthersteller 30 zur Ermittlung notwendiger Herstellungsbedingungen 31 für das Industrieprodukt entsprechend der gesendeten Herstellungsanweisung 19 gesendet. In einem weiteren Schritt S6 wird von der Vorrichtung 10 die ermittelten Herstellungsbedingungen 31 des Industrieproduktherstellers 30 zur Herstellung des Industrieproduktes empfangen. In einem weiteren Schritt S7 wird durch die Vorrichtung 10 auf Basis der empfangenen Herstellungsbedingungen 31 der optimale Herstellungsablaufes 50 für das Industrieprodukt selektiert.

Zusammenfassung der Erfindung
Zusammenfassend betrifft die vorliegende Erfindung ein Verfahren für ein automatisches Selektieren eines optimalen Herstellungsablaufes für ein Industrieprodukt mit den Schritten: Empfangen von einer Vorrichtung einer durch einen Industrieproduktbesteller bereitgestellte Industrieproduktbeschreibung und eine Materialstückliste für das Industrieprodukt, wobei die Materialstückliste eine Anzahl der jeweiligen Einzelkomponenten des Industrieproduktes entsprechend der empfangenen Industrieproduktbeschreibung umfasst;
Prüfen ob auch eine von dem Industrieproduktbesteller bereitgestellte Herstellungsanleitung zur Herstellung des Industrieproduktes empfangen wird;
Erzeugen einer Herstellungsanleitung zur Herstellung des Industrieproduktes auf Basis der empfangenen Industrieproduktbeschreibung, falls keine Herstellungsanleitung zur Herstellung des Industrieproduktes von dem Industrieproduktbesteller empfangen wird;
Zerlegen der erzeugten oder empfangenen Herstellungsanleitung zur Herstellung des Industrieproduktes in wenigstens eine Herstellungsanweisung, die einzelne separate Herstellungsschritte und/oder Baugruppen des Industrieproduktes umfasst; Senden der Herstellungsanweisung durch die Vorrichtung an wenigsten einen Industrieprodukthersteller zur Ermittlung notwendiger Herstellungsbedingungen für das Industrieprodukt entsprechend der gesendeten Herstellungsanweisung;
Empfangen von der Vorrichtung die ermittelten Herstellungsbedingungen des Industrieproduktherstellers zur Herstellung des Industrieproduktes; und
Selektieren durch die Vorrichtung auf Basis der empfangenen Herstellungsbedingungen den optimalen Herstellungsablauf für das Industrieprodukt.
Zudem betrifft die vorliegende Erfindung eine Vorrichtung und ein Computerprogrammprodukt.

Diesbezüglich wird automatisch eine optimale Herstellungsvariante zur Herstellung des Industrieproduktes bereitgestellt.

### Bezugszeichenliste

- 1: Verfahren
- 10: Vorrichtung
- 11: Empfangseinheit
- 12: Prüfeinheit
- 13: Erzeugungseinheit
- 14: Zerlegeeinheit
- 15: Sendeeinheit
- 16: Selektionseinheit
- 17: Anzeigeelement
- 18: Kommunikationsverbindung
- 19: Herstellungsanweisung
- 20: Industrieproduktbesteller
- 21: Industrieproduktbeschreibung
- 22: Materialstückliste
- 23: Herstellungsanleitung
- 30: Industrieprodukthersteller
- 31: Herstellungsbedingung
- 40: Netzwerk
- 50: Herstellungsablauf
- S1 - S7: Verfahrensschritte

## Patentansprüche

1. Verfahren (1) für ein automatisches Selektieren eines optimalen Herstellungsablaufes (50) für ein Industrieprodukt, mit den Schritten:
- Empfangen (S1) von einer Vorrichtung (10) einer durch einen Industrieproduktbesteller (20) bereitgestellte Industrieproduktbeschreibung (21) und eine Materialstückliste (22) für das Industrieprodukt, wobei die Materialstückliste (22) eine Anzahl der jeweiligen Einzelkomponenten des Industrieproduktes entsprechend der empfangenen Industrieproduktbeschreibung (21) umfasst;
- Prüfen (S2) ob auch eine von dem Industrieproduktbesteller (20) bereitgestellte Herstellungsanleitung (23) zur Herstellung des Industrieproduktes empfangen wird;
- Erzeugen (S3) einer Herstellungsanleitung (23) zur Herstellung des Industrieproduktes auf Basis der empfangenen Industrieproduktbeschreibung (21), falls keine Herstellungsanleitung (23) zur Herstellung des Industrieproduktes von dem Industrieproduktbesteller (20) empfangen wird;
- Zerlegen (S4) der erzeugten oder empfangenen Herstellungsanleitung (23) zur Herstellung des Industrieproduktes in wenigstens eine Herstellungsanweisung (19), die einzelne separate Herstellungsschritte und/oder Baugruppen des Industrieproduktes umfasst;
- Senden (S5) der Herstellungsanweisung (19) durch die Vorrichtung (10) an wenigsten einen Industrieprodukthersteller (30) zur Ermittlung notwendiger Herstellungsbedingungen (31) für das Industrieprodukt entsprechend der gesendeten Herstellungsanweisung (19);
- Empfangen (S6) von der Vorrichtung (10) die ermittelten Herstellungsbedingungen (31) des Industrieproduktherstellers (30) zur Herstellung des Industrieproduktes; und
- Selektieren (S7) durch die Vorrichtung (10) auf Basis der empfangenen Herstellungsbedingungen (31) des optimalen Herstellungsablaufes (50) für das Industrieprodukt.

2. Verfahren nach Anspruch 1, wobei der optimale Herstellungsablauf (50) für das Industrieprodukt eine optimale Aufteilung des Industrieproduktes in die Herstellungsanweisung (19) und auf die Industrieprodukthersteller (30) und ein Abbilden der Herstellungsanweisung (19) auf die empfangenen Herstellungsbedingungen (31) der Industrieprodukthersteller (30) umfasst.

3. Verfahren (1) nach einem der vorhergehenden Ansprüche, wobei das Selektieren (S7) des optimalen Herstellungsablaufes (50) für ein Industrieprodukt durch ein mit den empfangenen Herstellungsbedingungen (31) trainiertes künstliches neurales Netzwerk erfolgt.

4. Verfahren (1) nach einem der vorhergehenden Ansprüche, wobei die Herstellungsbedingungen (31) wenigstens:
- eine Produzierbarkeit,
- einen Betrag der Produktionskosten,
- einen Zeitpunkt des Produktionsbeginns,
- eine Produktionsdauer,
- einen Zeitpunkt der Produktlieferung,
- erfüllbare Leistungskennzahlen und/oder
- erfüllbare Qualitätskennzahlen umfassen.

5. Verfahren (1) nach einem der vorhergehenden Ansprüche, wobei das Ermitteln der Herstellungsbedingungen (31) eine Simulation zur Herstellung des Industrieproduktes, insbesondere ein 2D/3D CAD-Modell, durch den Industrieproduktherstellers (30) umfasst.

6. Verfahren (1) nach einem der vorhergehenden Ansprüche, wobei das Ermitteln der Herstellungsbedingungen (31) ein Herstellen eines Prototyps des Industrieproduktes durch den Industrieproduktherstellers (30) umfasst.

7. Verfahren (1) nach einem der vorhergehenden Ansprüche 1 bis 6, wobei der optimale Herstellungsablauf (50) als ein digitales Dokument dem Industrieproduktbesteller (20) bereitgestellt wird.

8. Verfahren (1) nach einem der vorhergehenden Ansprüche 1 bis 7, wobei der optimale Herstellungsablauf (50) über ein Webinterface dem Industrieproduktbesteller (20) bereitgestellt wird.

9. Vorrichtung (10) für ein automatisches Selektieren eines optimalen Herstellungsablaufes (50) für ein Industrieprodukt, umfassend:
- eine Empfangseinheit (11), die ausgebildet ist, eine durch einen Industrieproduktbesteller (20) bereitgestellte Industrieproduktbeschreibung (21) und eine Materialstückliste (22) für das Industrieprodukt zu empfangen, wobei die Materialstückliste (22) eine Anzahl der jeweiligen Einzelkomponenten des Industrieproduktes entsprechend der empfangenen Industrieproduktbeschreibung (21) umfasst und die ausgebildet ist, wenigstens eine Herstellungsbedingung (31) eines Industrieproduktherstellers (30) zur Herstellung des Industrieproduktes zu empfangen;
- eine Prüfeinheit (12), die zum Prüfen ausgebildet ist, ob auch eine Herstellungsanleitung (23) zur Herstellung des Industrieproduktes empfangen wird;
- eine Erzeugungseinheit (13), die ausgebildet ist, eine Herstellungsanleitung (23) zur Herstellung des Industrieproduktes auf Basis der empfangenen Industrieproduktbeschreibung (21) zu erzeugen, falls keine Herstellungsanleitung (23) zur Herstellung des Industrieproduktes von dem Industrieproduktbesteller (20) empfangen wird;
- eine Zerlegeeinheit (14), die ausgebildet ist, die erzeugte oder empfangene Herstellungsanleitung (23) zur Herstellung des Industrieproduktes in wenigstens eine Herstellungsanweisung (19), die einzelne separate Herstellungsschritte und/oder Baugruppen des Industrieproduktes umfasst, zu zerlegen;
- eine Sendeeinheit (15), die ausgebildet ist, die Herstellungsanweisung (19) an wenigsten einen Industrieprodukthersteller (30) zur Ermittlung notwendiger Herstellungsbedingungen (31) entsprechend der gesendeten Herstellungsanweisung (19) zur Herstellung des Industrieproduktes zu senden; und
- eine Selektionseinheit (16), die ausgebildet ist, auf Basis der von der Empfangseinheit (11) empfangenen Herstellungsbedingungen (31) den optimalen Herstellungsablauf (50) für das Industrieprodukt zu selektieren.

10. Vorrichtung (10) nach Anspruch 9, wobei der optimale Herstellungsablauf (50) für das Industrieprodukt eine optimale Aufteilung des Industrieproduktes in die Herstellungsanweisung (19) und auf die Industrieprodukthersteller (30) und ein Abbilden der Herstellungsanweisung (19) auf die empfangenen Herstellungsbedingungen (31) der Industrieprodukthersteller (30) umfasst.

11. Vorrichtung (10) nach einem der vorhergehenden Ansprüche 9 und 10, wobei das Selektieren (S7) des optimalen Herstellungsablaufes (50) für ein Industrieprodukt durch ein mit den empfangenen Herstellungsbedingungen (31) trainiertes künstliches neurales Netzwerk erfolgt.

12. Vorrichtung (10) nach einem der vorhergehenden Ansprüche 9 bis 11, wobei die Vorrichtung ein Anzeigeelement (17), insbesondere ein Touch-Display zum Anzeigen des optimalen Herstellungsablaufes.

13. Vorrichtung (10) nach einem der vorhergehenden Ansprüche 9 bis 12, wobei die Vorrichtung (10) über eine geschützte Kommunikationsverbindung (18), die eine kabelgebundene oder kabellose Kommunikation umfasst, mit dem Industrieproduktbesteller (20) und/oder dem Industrieprodukthersteller (30) kommuniziert.

14. Vorrichtung (10) nach einem der vorhergehenden Ansprüche 9 bis 13, wobei der optimale Herstellungsablauf über ein Webinterface an den Industrieproduktbesteller (20) bereitgestellt wird.

15. Computerprogramm mit Programmcode für das Ausführen eines Verfahrens (1) nach einem der vorhergehenden Ansprüche 1 bis 8, wenn das Computerprogramm auf einem elektronischen Gerät ausgeführt wird.
